# EUROPÄISCHE PATENTSCHRIFT

(11) **EP 0 829 058 B1**
(45) Veröffentlichungstag und Bekanntmachung des Hinweises auf die Patenterteilung: **21.04.1999**
(21) Anmeldenummer: 96918641.0
(22) Anmeldetag: 29.05.1996
(51) Int. Cl.: G06F 17/60

(54) **INFORMATIONSSYSTEM**
INFORMATION SYSTEM
SYSTEME D'INFORMATION

(30) Priorität: 29.05.1995 DE 19519610
(43) Veröffentlichungstag der Anmeldung: 18.03.1998
(73) Patentinhaber: DCI Datenbank Für Wirtschaftsinformationen GmbH, 82319 Starnberg (DE)
(72) Erfinder: MOHR, Michael, D-82319 Starnberg (DE)
(74) Vertreter: Grättinger & Partner (GbR)
(86) Internationale Anmeldenummer: EP9602308
(87) Internationale Veröffentlichungsnummer: WO9638796

(56) Entgegenhaltungen:
- EP-A- 0 370 146
- WO-A-93/19427
- WO-A-95/12176
- US-A- 5 347 632

## Beschreibung

Die Erfindung bezieht sich auf ein Informationssystem, bei dem Interessenten in einem Datenspeicher gespeicherte Informationsdaten beispielsweise über das herkömmliche Telefonnetz zugänglich sind.

Bereits bekannt sind sogenannte Telefax-Abfragesysteme, bei denen in einem Telefax-Gerät gespeicherte Informationen von Interessenten per Telefax abgerufen werden können. Dazu wird das abzufragende Telefax-Gerät durch das Telefax-Gerät des Interessenten angewählt, und daraufhin die im abzufragenden Telefax-Gerät gespeicherte Information an das Telefax-Gerät des Interessenten über das Telefonnetz übertragen.

Ferner sind Datenbanksysteme bekannt, bei denen ein Interessent mit Hilfe eines PC und eines Modems über das Telefonnetz in einem Datenspeicher gespeicherte Informationen verschiedener Anbieter gezielt abrufen und Bestellungen gewünschter Produkte aufgeben kann.

Aus D1 (WO-A-95/12167) ist ein interaktives Informationssystem bekannt, bei welchem Anbieter und Vermittler von Waren oder Dienstleistungen zugehörige Daten auf einem zentralen Rechner speichern lassen, wobei sie sich eines zwischengeschalteten Dienstes bedienen können, welcher diese Daten in einer gewünschten Weise aufbereitet. Nachfrager können über Suchworte o.ä. nach Informationen in der Datenbank des zentralen Rechners suchen und sie gegebenenfalls abrufen. Jeder Beteiligte verfügt über ein Datenendgerät, wie beispielsweise einen Personal-Computer. Die Datenübertragungen erfolgen über das Telefonleitungsnetz.

Es handelt sich hierbei um ein typisches Datenbanksystem, bei welchem nur dann ein Datenaustausch erfolgt, wenn eine der Beteiligten das Endgerät bedient. Es kann daher als Nachteil angesehen werden, daß ein Interessent Informationen nicht erhält, wenn er nicht zu gegebener Zeit das Endgerät bedient.

Der Erfindung liegt die **Aufgabe** zugrunde, ein weiteres Informationssystem anzugeben, mit dessen Hilfe Interessenten gezielt mit Informationen versorgt werden können.

Die Lösung dieser Aufgabe erfolgt mit den im Hauptanspruch genannten Mitteln. Vorteilhafte Weiterbildungen sind Gegenstand der Unteransprüche.

Das erfindungsgemäße Informationssystem ist besonders vorteilhaft als Verkaufsförderungssystem einsetzbar. Zu diesem Zweck wird der Datenspeicher von Anbietern mit Produkt- oder Dienstleistungsinformationen gefüttert. Dies kann in an sich bekannter Weise über herkömmliche Informationsübertragungs-Einrichtungen geschehen, wie beispielsweise Fax-Geräte, PC/Modem-Kombinationen, PC/ISDN-Geräte oder Endgeräte herkömmlicher Datennetze, wie beispielsweise INTERNET. Die in den Datenspeicher einzuspeichernden Informationen bestehen beispielsweise aus aktuellen Preis- und Produktinformationen, technischen Daten, Firmeninformationen und Vertriebs- und Handelsinformationen. Diese Informationen können mit Werbe-Anzeigen, redaktionellen Beiträgen, Testberichten und weiteren wissenswerten Informationen verknüpft sein. Durch On-Line-Verbindung zu bestehenden Datenbanken kann der Anbieter seine Informationsdaten mit zusätzlichen, für einen potentiellen Interessenten wichtigen Informationen versehen. Nachdem der Anbieter die in den Datenspeicher einzulesenden Informationsdaten zusammengestellt hat, überträgt er diese zum Datenspeicher. Dies geschieht in an sich bekannter Weise über das bestehende Telefon-, ISDN-, Datex-Netz oder dgl.

Der Datenspeicher ist mit einer Eingabe-Anschluß-Einheit versehen, die eine Prüfeinrichtung aufweist, in der Berechtigungscodes speicherbar sind. Dadurch wird sichergestellt, daß nur berechtigte Anbieter ihre Informationsdaten in den Datenspeicher einspeichern können.

Berechtigten Anbietern wird daher ein Berechtigungscode zugeteilt, der vor den zum Einlesen bestimmten Informationsdaten an den Datenspeicher zu übertragen ist.

Stellt die Prüfeinrichtung fest, daß ein gültiger Berechtigungscode vorliegt, werden die nachfolgenden Informationsdaten im Datenspeicher gespeichert.

Zwischen dem Datenspeicher und einigen Teilnehmern, wie beispielsweise Anbietern oder Händlern, werden dementsprechend Prüfeinrichtungen, die auch als Filter bezeichnet werden können, zwischengeschaltet. Dabei hat beispielsweise der Filter für den Händler zwei Funktionen:

Durch ihn hat der Händler nur Zugriff auf Daten derjenigen Anbieter, mit denen er bisher geschäftlich in Verbindung stand oder vertraglich gebunden ist. Er hat allerdings die Möglichkeit, einen Freischaltcode zu beantragen, durch den er auf die Angebote aller Anbieter zugreifen kann.

Als zweite Funktion besteht für den Händler die Möglichkeit, bei Anfragen dem Datenspeicher Anbieter auszuschliessen, deren Angebote für ihn nicht interessant sind. Dies könnte beispielsweise darauf beruhen, daß der Händler mit diesem Anbieter bereits negative Erfahrungen gemacht hat. Gleichzeitig bedeutet dies für den Anbieter eine ständige Qualitätskontrolle seiner Serviceleistungen.

Der Filter für die Anbieter hat eine dem Filter für die Händler analoge Aufgabe. Mittels eines Freischaltcodes kann der Anbieter auf alle Anfragen mit eigenen Angeboten reagieren, sofern er vom nachfragenden Händler nicht ausgeschlossen wurde. Ohne diesen Code würde er nur auf Angebote seiner Vertragshändler reagieren können.

Ferner weist die Eingabe-Anschluß-Einheit an sich bekannte Konvertierungs-Einrichtungen auf, die die gemäß den Erfordernissen des jeweils benutzten Nachrichtenübertragungsweges verwendeten Datenformate konvertiert, so daß im Datenspeicher alle Informationsdaten in einem einheitlichen Format vorliegen.

Der Datenspeicher ist ferner mit einer Ausgabe-Anschluß-Einheit versehen, die die gespeicherten Informationsdaten in ein für die Übertragung an einen Interessenten geeignetes Format konvertiert. Diese Übertragung kann ebenfalls über die oben genannten an sich bekannten Nachrichten-Übertragungswege erfolgen.

Der Datenspeicher ist ferner mit einem Speicher für Teilnehmerrufnummern versehen, in dem die Rufnummern an bestimmten Informationsdaten interessierter Teilnehmer gespeichert sind. Ferner ist eine Wähleinrichtung vorgesehen, die in bestimmbaren Zeitabständen interessierte Teilnehmer mit Kurzinformationen über die im Datenspeicher gespeicherten Informationsdaten versorgt. Vorzugwseise wählt die Wähleinrichtung automatisch die interessierten Teilnehmer dann an, wenn neue Informationsdaten in den Datenspeicher eingegeben werden, und überträgt eine entsprechene Kurzinformation. Die Kurzinformationen werden mit Rückruf-Codes versehen, und beispielsweise per Telefax an die Interessenten übermittelt. Der Interessent kann dann an Hand der Rückruf-Codes gezielt interessierende Informationsdaten aus dem Datenspeicher abrufen. Dies erfolgt beispielsweise in derselben Weise, wie bei den eingangs erwähnten Fax-Abrufsystemen. Natürlich kann die Datenübertragung auch per Modem/PC, ISDN, oder Kabelfernsehkanäle erfolgen, oder in Form einer CD-ROM oder eines Katalogs auf dem Postweg verschickt werden.

Entsprechend einer vorteilhaften Ausführungsform der Erfindung ist der Datenspeicher kein Speicher im herkömmlichen Sinne. Es handelt sich vielmehr um eine Organisationseinheit, welche Datenbanken vernetzt. Die Teilnehmer werden durch den Datenspeicher gezielt an die für ihn relevanten Informationen weitervermittelt. Die Teilnehmer können dabei auch ohne ihr Wissen, d.h. "verdeckt" zu den sie interessierenden Datenbanken weitergeschaltet werden. Durch diese Maßnahme bleiben die eigentlichen Daten dort, wo sie auch gepflegt werden. Dies gewährleistet, daß im Datenspeicher des erfindungsgemäßen Informationssystems keine "Daten-Monopolstellung" aufgebaut wird.

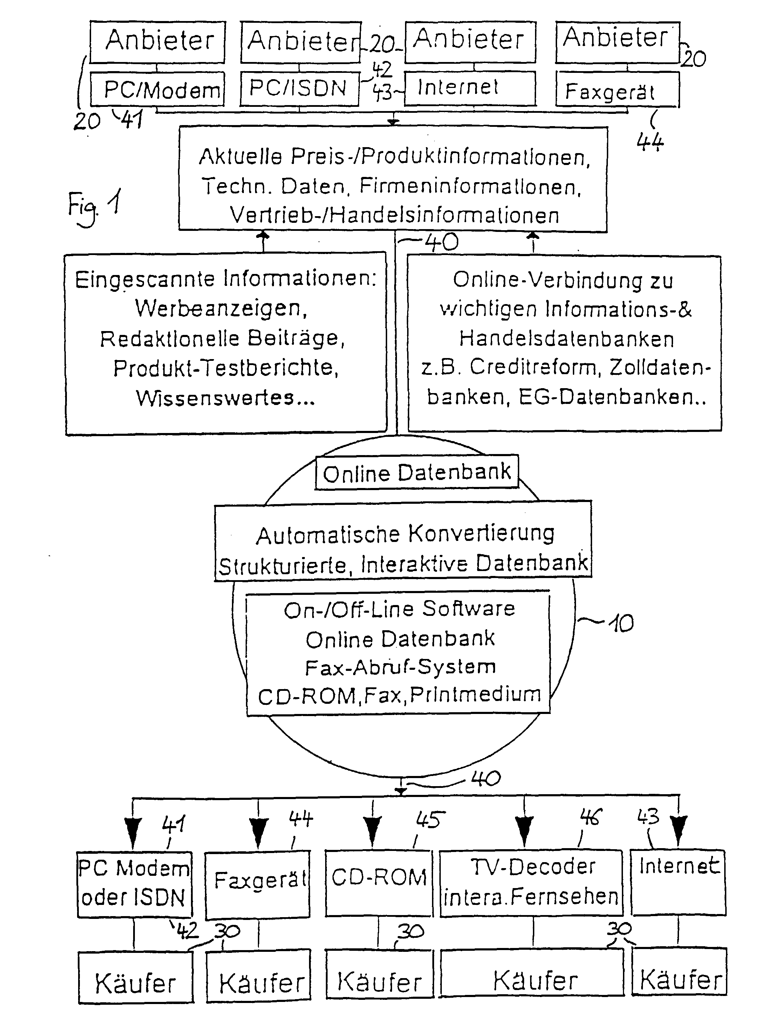

Das erfindungsgemäße Informationssystem wird nachstehend anhand der Figuren näher erläutert. Dabei sind im einzelnen
- Fig. 1: eine schematische Darstellung der Struktur des Informationssystems;

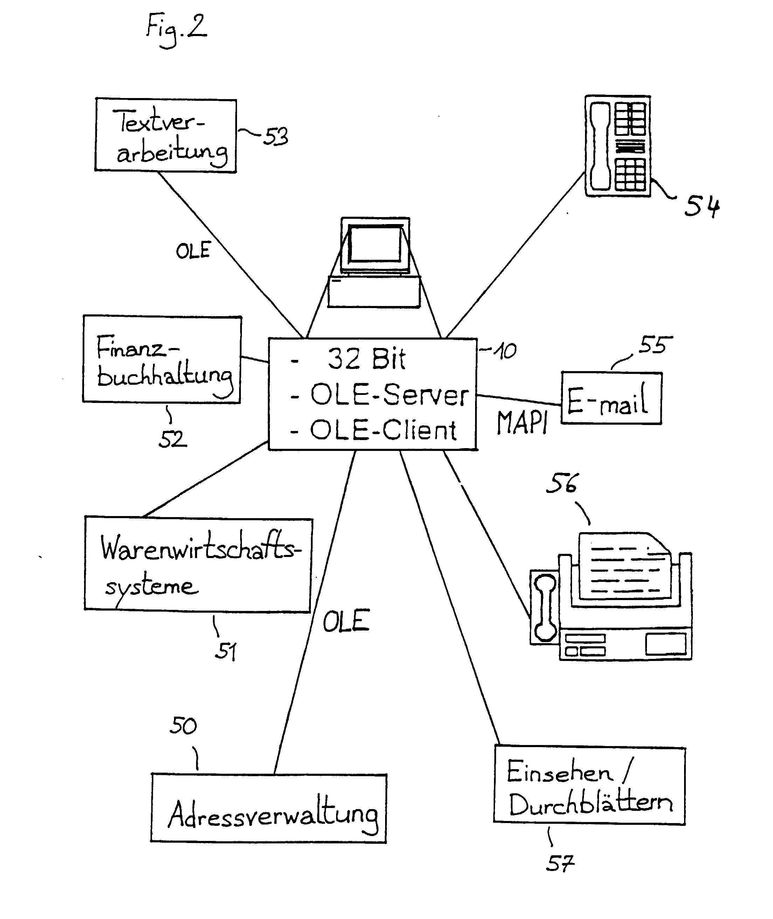

- Fig. 2: eine schematische Darstellung der Komponenten des Datenspeichers, und

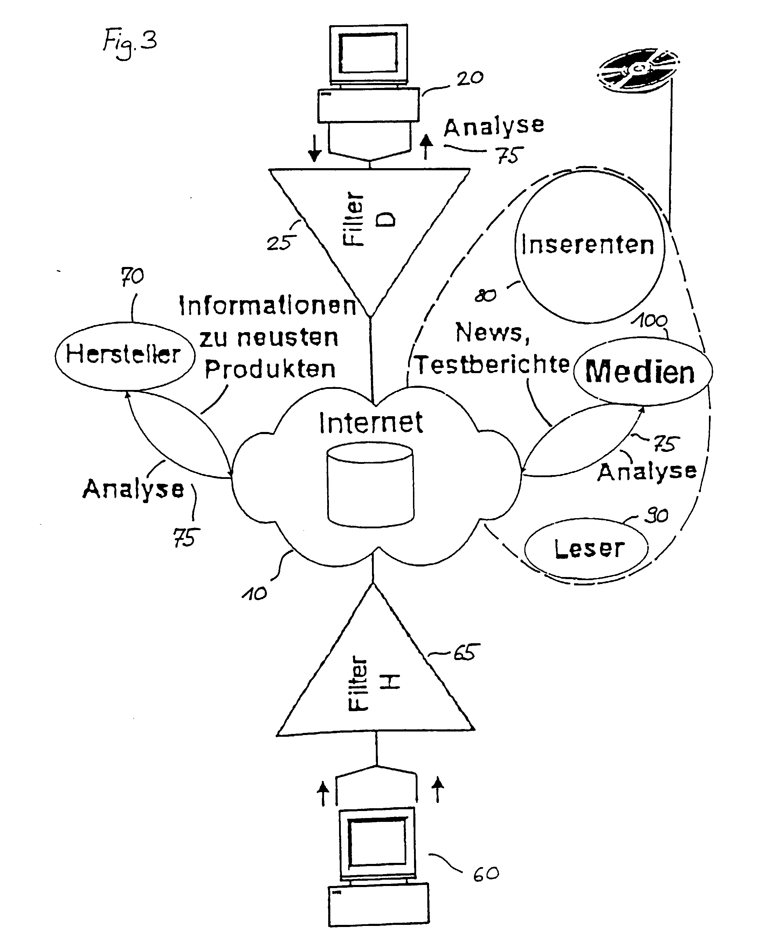

- Fig. 3: eine schematische Darstellung der Struktur des in das INTERNET eingefügten Informationssystems.

Das Informationssystem weist einen Datenspeicher 10 auf, der nach Art einer strukturierten, interaktiven Datenbank organisiert ist. Im Datenspeicher 10 sind von Anbietern 20 zusammengestellte Informationsdaten speicherbar. Die gespeicherten Informationsdaten sind von Käufern 30 abrufbar.

Anbieter 20 und Käufer 30 sind über Nachrichtenübertragungswege 40 mit dem Datenspeicher 10 verbunden. Geeignete Nachrichtenübertragungswege sind beispielsweise das Telefonnetz, ISDN-Netz, Datennetze oder Kabelfernsehnetze.

Der Datenspeicher 10 weist eine in der Figur nicht dargestellte Eingabe- und Ausgabe-Anschluß-Einheit auf, mit der der Datenspeicher 10 mit den verschiedenen Nachrichtenübertragungswegen 40 verbunden ist. Die Anbieter 20 und Käufer 30 können über einen frei wählbaren Nachrichtenübertragungsweg 40 mit dem Datenspeicher 10 verbunden sein. Sie sind dazu mit dem entsprechenden Endgerät ausgerüstet, wie beispielsweise einem PC mit Modem- 41 oder ISDN- 42 Anschluß, einem INTERNET-Endgerät 43, einem Fax-Gerät 44, einer CD-ROM-Leseeinheit 45 oder einem TV-Dekoder und Fernsehapparat 46. Die Eingabe- und Ausgabe-Anschluß-Einheit konvertiert die im Datenspeicher in einem bestimmten Format vorliegenden Informationsdaten in das für die Übertragung zum/vom Teilnehmer benötigte Format. Ferner weist sie eine Prüfeinrichtung auf, die von Teilnehmern ausgesendete Berechtigungscodes überprüft, so daß nur berechtigte Teilnehmer Zugriff auf den Datenspeicher haben.

Die Komponenten des Datenspeichers 10 sind eine Adressverwaltung 50, die über eine OLE-Schnittstelle mit dem Datenspeicher verbunden ist, Tools für Warenwirtschaftssysteme 51 und zur Finanzbuchhaltung 52, ein ebenfalls über eine OLE-Schnittstelle angebundenes Textverarbeitungssystem 53, ein Telefon 54, ein über eine MAPI-Schnittstelle angeschlossener e-mail-Anschluß 55, ein Fax 56 und letztlich ist eine Viewer/Browser-, d.h. Einseh-/Durchblätter-Funktionalität 57 vorgesehen, damit die Teilnehmer eine einfache Zugriffsmöglichkeit auf die vom Datenspeicher 10 zur Verfügung gestellten Daten haben.

Bei der Einfügung des Datenspeichers in das INTERNET wird der Zugriff der Anbieter bzw. Distributoren 20 und der Händler 60 durch Filter 25, 65 reglementiert. Die Anbieter 20 und Händler 60 können einerseits ausgewählte Teilnehmer aus dem Empfängerkreis der von ihnen zum Datenspeicher 10 übermittelten Informationen ausschließen, andererseits kann die Filterfunktion auch darin bestehen, daß verschiedene Informationen anderer Teilnehmer nicht zu ihnen gelangen. Hersteller 70, Anbeiter 20, Inserenten 80 und Leser 90 haben die Möglichkeit, Analysen 75 aus dem Datenspeicher 10 zu erhalten. Dadurch können beispielsweise Informationen über die derzeitige Marktstellung oder über die angebotenen Waren erhalten werden. Inserenten 80 und Leser 90 haben über Medien 100 Zugriff auf die Informationen des Datenspeichers 10.

## Patentansprüche

1. Informationssystem mit einem Datenspeicher (10), der mit einer Eingabe-Anschluß-Einheit und einer Ausgabe-Anschluß-Einheit versehen ist, und Teilnehmerstationen (20; 30) zur Eingabe und/oder zum Abrufen von Informationsdaten in den bzw. aus dem Datenspeicher, die mit der Eingabe- und/oder Ausgabeanschlußeinheit über Nachrichtenübertragungswege (40), wie beispielsweise ein Fernsprechnetz, verbindbar sind, dadurch gekennzeichnet, daß
der Datenspeicher mit einem Speicher für Teilnehmerrufnummern und einer Wähleinrichtung versehen ist, die in bestimmbaren Zeitabständen an vorbestimmbare Teilnehmerstationen Kurzinformationen über im Datenspeicher befindliche Informationsdaten übermittelt, und anhand der Kurzinformationen von den Teilnehmerstationen ausgewählte Informationsdaten abrufbar sind.

2. Informationssystem nach Anspruch 1,
dadurch **gekennzeichnet,**
daß zumindest ein Teil der Teilnehmerstationen (20) mit Einrichtungen zur Erzeugung und Aussendung eines Berechtigungscodes ausgerüstet sind.

3. Informationssystem nach Anspruch 2,
dadurch **gekennzeichnet,**
daß die Eingabe- und/oder Ausgabe-Anschluß-Einheit mit einer Prüfeinrichtung versehen ist, in der Berechtigungscodes speicherbar sind, und daß die Prüfeinrichtung die von den Teilnehmerstationen übertragenen Berechtigungscodes auf ihre Gültigkeit hin überprüft, und nur bei Vorliegen eines gültigen Berechtigungscodes eine Verbindung zwischen der jeweiligen Teilnehmerstationen und dem Datenspeicher ermöglicht.

4. Informationssystem nach einem der vorhergehenden Ansprüche,
dadurch **gekennzeichnet,**
daß die Teilnehmerstation aus einem Telefax-Gerät, einer Kombination aus einem Modem mit einem PC oder Fernsehgerät besteht.

5. Informationssystem nach einem der vorhergehenden Ansprüche,
dadurch **gekennzeichnet,**
daß die Übermittlung der Kurzinformationen und der Abruf und die Übermittlung der Informationsdaten per Telefax erfolgt.

6. Informationssystem nach einem der vorhergehenden Ansprüche,
dadurch **gekennzeichnet,**
daß der Datenspeicher (10) zwischen den Teilnehmern vermittelt und durch die Verwaltung von Links Datenbanken vernetzt.

## Claims

1. Information system with a data storage unit (10), which is provided with an input connection unit and an output connection unit and subscriber stations (20; 30) for the input of information data into the data storage unit and/or for calling up information data from the data storage unit, which are able to be connected to the input and/or output connection unit by way of communications transmission channels (40), such as for example a telephone network, characterised in that the data storage unit is provided with a memory for subscriber telephone numbers and a dialling device, which at time intervals which can be predetermined transmits brief information about information data located in the data storage unit to subscriber stations which can be predetermined and by means of the brief information, information data selected by the subscriber stations can be called up.

2. Information system according to Claim 1, characterised in that at least part of the subscriber stations (20) are equipped with devices for producing and transmitting an authorisation code.

3. Information system according to Claim 2, characterised in that the input and/or output connection unit is provided with a verification device, in which authorisation codes can be stored and that the verification device checks the validity of the authorisation codes transmitted by the subscriber stations and allows a connection between the respective subscriber stations and the data storage unit only in the presence of a valid authorisation code.

4. Information system according to one of the preceding Claims, characterised in that the subscriber station consists of a telefax machine, a combination of a modem with a PC or television monitor.

5. Information system according to one of the preceding Claims, characterised in that the transmission of the brief information and the calling up and transmission of the information data takes place by telefax.

6. Information system according to one of the preceding Claims, characterised in that the data storage unit (10) communicates between the subscribers and interlinks due to the management of links data banks.

## Revendications

1. Système d'information comprenant une mémoire de données (10) qui est pourvue d'une unité de connexion d'entrée et d'une unité de connexion de sortie, ainsi que des stations d'utilisateurs (20; 30) pour entrer et/ou appeler des données d'information dans ou de la mémoire de données, qui peuvent être connectées à l'unité de connexion d'entrée et/ou de sortie par l'intermédiaire de systèmes de transmission d'informations, par exemple par le réseau téléphonique, caractérisé par le fait que
la mémoire de données est pourvue d'une mémoire pour les numéros d'appel des clients et d'un dispositif de composition de numéro d'appel qui, à intervalles de temps prédéterminés, transmet à des stations d'utilisateurs prédéterminées de brèves informations sur les données d'informations présentes dans la mémoire de données et que, sur la base des brèves informations, les données d'information sélectionnées peuvent être appelées par les stations d'utilisateurs.

2. Système d'information selon la revendication 1, caractérisé par le fait qu'au moins une partie des stations d'utilisateurs (20) sont équipées de dispositifs pour générer et transmettre un code d'accès.

3. Système d'information selon la revendication 2, caractérisé par le fait que l'unité de connexion d'entrée et/ou de sortie est munie d'un dispositif de contrôle dans lequel des codes d'accès peuvent être mémorisés etparle fait que le dispositif de contrôle vérifie la validité des codes d'accès transmis par les stations d'utilisateurs et, lorsque le code d'accès est valide, autorise une connexion entre la station d'utilisateur concernée et la mémoire de données.

4. Système d'information selon une des revendications précédentes, caractérisé par le fait que la station d'utilisateur est un télécopieur, une combinaison modem - ordinateur PC ou un téléviseur.

5. Système d'information selon une des revendications précédentes, caractérisé par le fait que la transmission des brèves informations et l'appel et la transmission des données d'information ont lieu par télécopieur.

6. Système d'information selon une des revendications précédentes, caractérisé par le fait que la mémoire de données (10) relie les utilisateurs entre eux et, par la gestion de liaisons, connecte les banques de données en réseau.
